# EUROPEAN PATENT APPLICATION

(11) **EP 1 286 095 A1**
(43) Date of publication of application: **26.02.2003**
(21) Application number: 01120137.3
(22) Date of filing: 21.08.2001
(51) Int. Cl.: F16L 11/10, F16L 11/02

(54) **A strengthened supporting structure of a fluid transport hose**

(71) Applicant: Chen, Ray, Taipei City (TW)
(72) Inventor: Chen, Ray, Taipei City (TW)
(74) Representative: Viering, Jentschura & Partner

(57) **Abstract**

A strengthened supporting structure of a fluid transport hose (2) comprises a fluid transport hose, which has a fluid transport layer (21) therein. A surrounding layer (23) is set outside of the fluid transport layer while a hollow flow way (12) is set inside of the fluid transport layer. Besides, a supporting spiral spring wire (24) is set inside the hollow flow way (12) to paste tightly to the inner wall of the fluid transport layer (21) while a fixing spiral spring wire is set outside the surrounding layer (23) to clip tightly to the fluid transport hose (2) from the inner and outer in coordination with the supporting spiral spring wire (24) to make the fluid transport hose (2) maintain steady exterior style such that the function of fluid transport can be kept. In addition, both the supporting spiral spring wire (24) and the fixing spiral spring wire have good flexibility to make the fluid transport hose keep steady transport effect under bending.

## Description

### BACKGROUND OF THE INVENTION

### 1. Field of the invention

The present invention relates to a strengthened supporting structure of a fluid transport hose, especially to a new one which has a steady exterior style and enables to keep stability of fluid transport, and further are suitable for different places of extracting and draining off fluid.

### 2. Description of the prior art

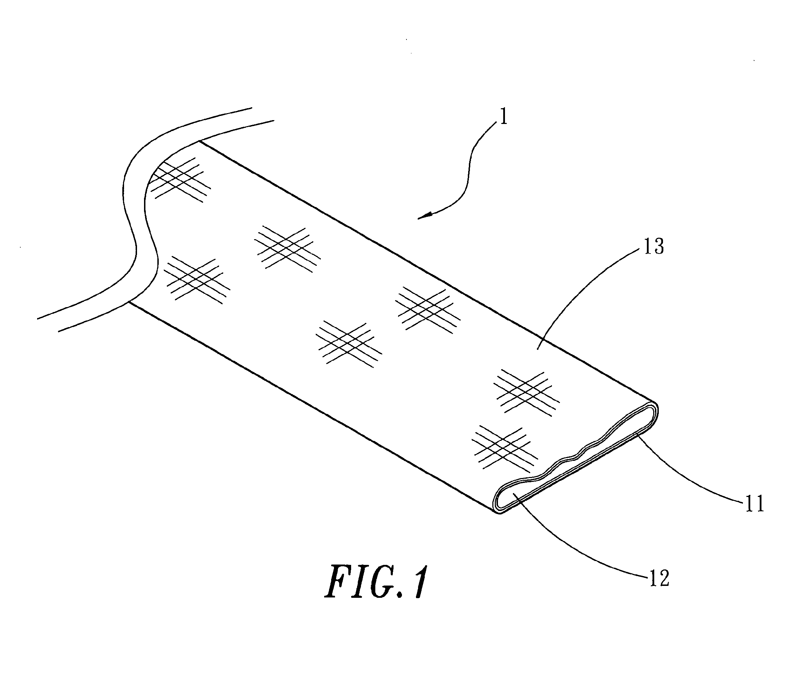

The fluid transport hose 1 said in the present invention is shown in FIG. 1, and is mainly applied to some fire-fighting equipments, such as fire hoses, etc. A fluid transport layer 11 is set at the inner layer of the fluid transport hose 1. The fluid transport layer 11 is made of rubber, and has a hollow flow way 12 used for transporting fluid therein. A surrounding layer 13 used to sealing and protecting the fluid transport layer 11 is set outside of the fluid transport layer 11, and is made of a material of cotton yarn and cloth, and so on.

From the structure described above, the fluid transport hose 1 is a soft and mutable object. The style of the fluid transport hose 1 is flat ordinarily, and when a fluid passes through the hollow flow way 12, pressure of the fluid can distend the fluid transport hose 1 such that the purpose of transporting a fluid is achieved.

However, the fluid transport hose 1 described above is only suitable for drainage machines, but not for suction machines because a suction machine requires an air-extracting action of an air comprising (not shown in figures) to pump fluid, and, therefore, when a fluid transport hose 1 is connected to an air compressing, the air-extracting action makes outer pressure larger than inner pressure and thus the fluid transport hose 1 is flattened such that the fluid can't proceed extraction.

Besides, when encountering a bend, the fluid transport hose 1 also forms a bend such that area of cross section is reduced and thus fluid is transported more difficultly. Therefore, the object described above has many disadvantages such that it is not a perfect design and needs improvement.

The inventor of the present invention ruminated over the disadvantages resulted from the habitually used fluid transport hoses, and earnestly deliberated the way of improvement and innovation. After studying hard for a long period, the inventor eventually succeeded in inventing the present invention, a strengthened supporting structure of a fluid transport hose suitable for extracting and draining motion of any fluid by strengthening the structure of the fluid transport hose.

### SUMMARY OF THE INVENTION

The first purpose of the present invention is to provide a strengthened supporting structure of a fluid transport hose, which strengthens the integrity of the inner and outer structure to make the fluid transport hose suitable for extraction and drain of any fluid with no obstruction.

The second purpose of the present invention is to provide a strengthened supporting structure of a fluid transport hose, which maintains the bending effect of the fluid transport hose, and preserves transport from obstruction under bending, and, besides, is not limited to the space and the place.

A strengthened supporting structure of a fluid transport hose achieving the purposes described above comprises a fluid transport hose, which has an inner fluid transport layer and an outer surrounding layer. The inner fluid transport layer has a hollow flow way, and a supporting spiral spring wire is further set inside the hollow flow way to hold tightly to the wall of the fluid transport layer. Besides, a fixing spiral spring wire is set outside the surrounding layer to tightly press the fluid transport layer from the inner and the outer in coordination with inside supporting spiral spring wire such that the fluid transport hose can keep a steady exterior style and maintain the function of fluid transport. Besides, both the supporting spiral spring wire and fixing spiral spring wire have good flexibility to make the fluid transport hose keep steady effect of transport at bending places.

### BRIEF DESCRIPTION OF THE DRAWINGS

The drawings disclose an illustrative embodiment of the present invention which serves to exemplify the various advantages and objects hereof, and are as follows:
FIG. 1 is the 3D diagram of the commonly known fluid transport hose;
FIG.2 is the schematic diagram of the present invention, a strengthened supporting structure of a fluid transport hose;
FIG.3 is the partial sectional drawing of the strengthened supporting structure of a fluid transport hose;
FIG.4 is the schematic diagram of a banding example of the strengthened supporting structure of a fluid transport hose.

### [Diagram Remarks]

1 Fluid transport hose
11 Fluid transport layer
12 Hollow flow way
13 Surrounding layer
2 Fluid transport hose
21 Fluid transport layer
22 Hollow flow way
23 Surrounding layer
24 Supporting spiral spring wire
25 Fixing spiral spring wire
3 Cylinder

### DETAILED DESCRIBTION OF THE PREFERRED EMBODIMENT

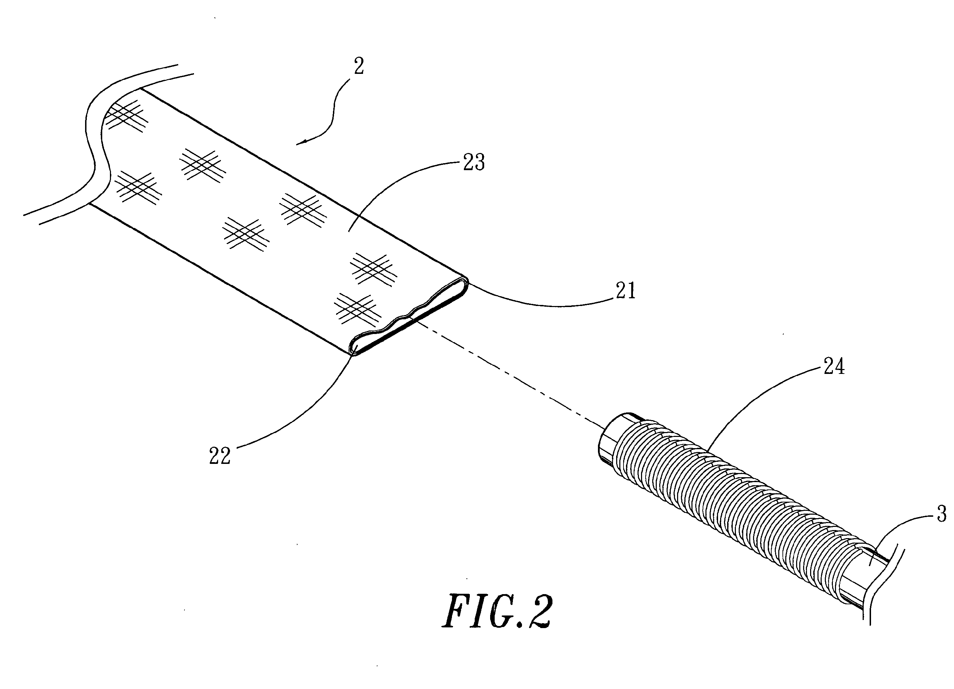

Referring to FIG.2, the present invention provides a strengthened supporting structure of a fluid transport hose 2, which is a soft and mutable object and is flat originally. A fluid transport layer 21 is set inside the fluid transport hose 2 and has a hollow flow way 22 therein, and, besides, a surrounding layer 23 is set outside of the fluid transport layer 21. Besides, the present invention has a supporting spiral spring wire 24 which is made of a metal wire. First, the supporting spiral spring wire 24 is surrounded a cylinder 3 with fixing two ends thereof to avoid slake. The cylinder 3 and surrounded supporting spiral spring wire 24 is then passed through the hollow flow way 22, and then two ends of the supporting spiral spring wire 24 is released to make the supporting spiral spring wire 24 paste tightly to the inner side of the fluid transport layer 21. Therefore, the hollow flow way 22 can be distended to be beneficial to transport fluid by the supporting spiral spring wire 24.

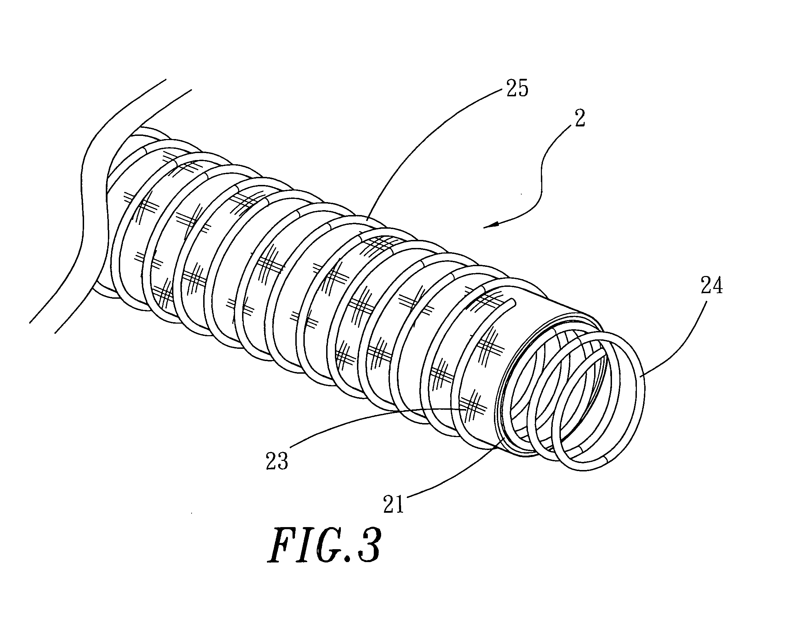

Referring to FIG.3, besides, the present invention has a fixing spiral spring wire 25 outside the surrounding layer 23. The fixing spiral spring wire is made of a metal wire, and surrounded on the surface of the surrounding layer 23 to make the supporting spiral spring wire 24 and the fixing spiral spring wire 25 clip tightly to the fluid transport hose 2 from the inner and the outer simultaneously to produce a steady structure.

According to the structure described above, the present invention provides a strengthened structure of a fluid transport hose 2, wherein the hollow flow way 22 keeps a constant inside diameter to make fluid have no obstruction and delay in transport process, and is suitable for any equipment used to extract or drain off fluid.

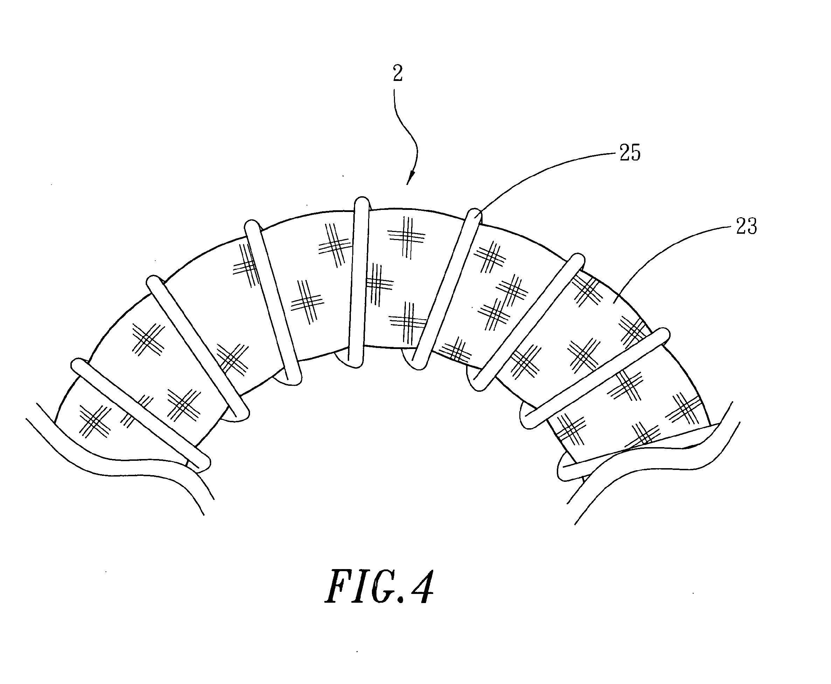

Referring to FIG.4, the strengthened structure of the fluid transport hose formed according to what described above has good flexibility. Because of the coordination of supporting spiral spring wire and the fixing spiral spring wire, the fluid transport hose still lets the inside diameter of the hollow flow way maintain a constant value to make the function of transport normal even encountering a small radius bend. Therefore, when the present invention encounters a bend or an obstruction, the function of transport isn't affected by the bend such that the present invention is suitable for any place in where different fluids is extracted or drained off.

The surfaces of the above-described supporting spiral spring wire and fixing spiral spring wire can be processed with rust proof finishing to prevent from gathering rust due to contacting fluid for a long period. The methods of rust proof finishing are commonly know, and do not need to be described additionally here.

Comparing with commonly used technologies of a fluid transport hose described above, the strengthened structure of a fluid transport hose provided from the present invention has following advantages:
1. The present invention ensures normal transport of fluid. No matter under extracting or draining off fluid, flow area is kept constant such that the fluid transport hose can be applied to a wider field.
2. Even though the fluid transport hose encounters a turn, the flow area can be kept constant to make transport of fluid smooth. Therefore, the present invention can work smoothly without limits at any place or any location.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A strengthened supporting structure of a fluid transport hose, which comprises:
said fluid transport hose, which has a fluid transport layer therein, a hollow flow way being set inside while a surrounding layer is set outside said fluid transport layer;
a supporting spiral spring wire set inside said hollow flow way, which pastes tightly to an inner side of said fluid transport layer;
a fixing spiral spring wire surrounded outside said surrounding layer, which clips tightly said fluid transport hose in coordination with said supporting spiral spring wire.

2. A strengthened supporting structure of a fluid transport hose as recited in claim 1, wherein said supporting spiral spring wire is formed by a spiral wire and has good flexibility.

3. A supporting strengthened structure of a fluid transport hose as recited in claim 1, wherein said fixing spiral spring wire is formed by a spiral wire and has good flexibility.
